# EUROPEAN PATENT APPLICATION

(11) **EP 2 858 410 A1**
(43) Date of publication of application: **08.04.2015**
(21) Application number: 13800782.8
(22) Date of filing: 30.05.2013
(51) Int. Cl.: H04W 28/16, H04W 52/24, H04W 72/04

(54) **WIRELESS COMMUNICATION METHOD, WIRELESS COMMUNICATION SYSTEM, WIRELESS BASE STATION AND USER TERMINAL**

(30) Priority: 04.06.2012 JP 2012127182
(71) Applicant: NTT DOCOMO, INC., Chiyoda-ku Tokyo 100-6150 (JP)
(72) Inventor: NAGATA, Satoshi, Tokyo 100-6150 (JP); KISHIYAMA, Yoshihisa, Tokyo 100-6150 (JP); TAKEDA, Kazuaki, Tokyo 100-6150 (JP)
(74) Representative: Hoffmann Eitle
(86) International application number: PCT/JP2013/065055
(87) International publication number: WO 2013/183541

(57) **Abstract**

The present invention is designed to reduce the impact of interference even when different DL/UL configurations are applied between neighboring transmitting/receiving points (radio base stations). A radio communication method in a radio communication system, in which a plurality of radio base stations that communicate with a user terminal by means of time division duplexing each change the DL/UL configuration independently, includes the steps in which each radio base station measures the interference levels from other radio base stations, and transmits a change request signal to request a change of the DL/UL configuration and/or a change of transmission power to the other radio base stations, based on the measured interference levels, and the other radio base stations, having received the change request signal, change the DL/UL configuration and/or transmission power and communicate with the user terminal.

## Description

### Technical Field

The present invention relates to a radio communication method, a radio communication system, a radio base station and a user terminal that are applicable to cellular systems and so on.

### Background Art

In a UMTS (Universal Mobile Telecommunications System) network, attempts are made to optimize features of the system, which are based on W-CDMA (Wideband Code Division Multiple Access), by adopting HSDPA (High Speed Downlink Packet Access) and HSUPA (High Speed Uplink Packet Access), for the purposes of improving spectral efficiency and improving the data rates. With this UMTS network, long-term evolution (LTE) is under study for the purposes of further increasing high-speed data rates, providing low delay, and so on (non-patent literature 1).

In a third-generation system, it is possible to achieve a transmission rate of maximum approximately 2 Mbps on the downlink by using a fixed band of approximately 5 MHz. Meanwhile, in an LTE system, it is possible to achieve a transmission rate of about maximum 300 Mbps on the downlink and about 75 Mbps on the uplink by using a variable band, which ranges from 1.4 MHz to 20 MHz. Also, in the UMTS network, successor systems of the LTE system (referred to as, for example, "LTE-Advanced" or "LTE enhancement" (hereinafter referred to as "LTE-A")) are under study for the purpose of achieving further broadbandization and increased speed.

Now, in radio communication, as uplink (UL) and downlink (DL) duplexing methods, there are frequency division duplexing (FDD), which divides between the uplink and the downlink based on frequency, and time division duplexing (TDD), which divides between the uplink and the downlink based on time. In the event of TDD, the same frequency is applied to uplink and downlink transmission, so that the uplink and the downlink are divided based on time and transmitted from one transmitting point. Since the same frequency is used between the uplink and the downlink, the transmitting point (radio base station) and the user terminal have to switch between transmission and reception.

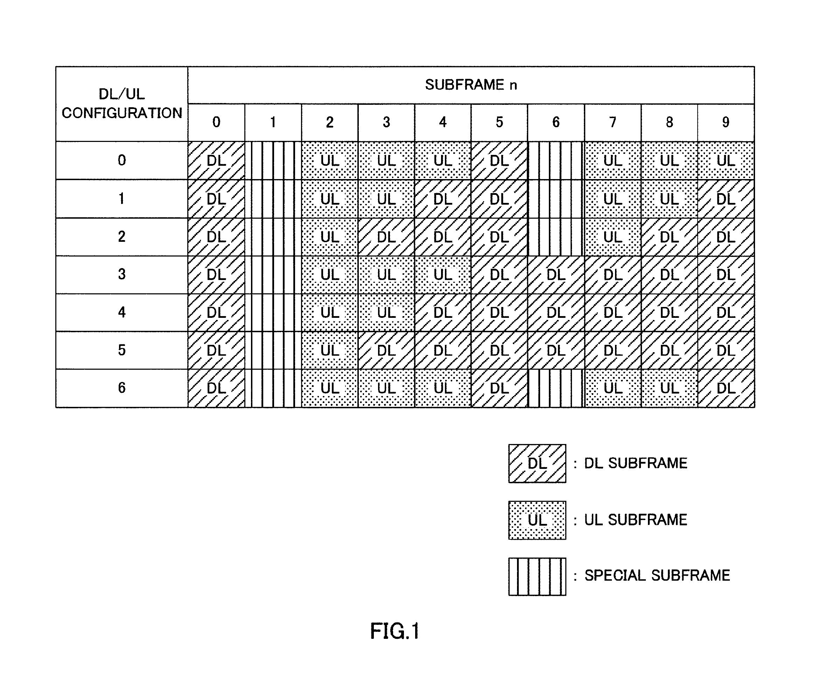

Also, in TDD in the LTE system, frame configurations (transmission ratios between uplink subframes and downlink subframes (DL/UL configurations)) to support a plurality of different types of asymmetrical uplink/downlink resource allocation are defined (see FIG. 1). In the LTE system, as shown in FIG. 1, seven frame configurations, namely DL/UL configurations 0 to 6, are defined, where subframes #0 and #5 are allocated to the downlink and subframe #2 is allocated to the uplink. Also, to prevent interference between transmitting points (or between cells), the same DL/UL configuration is applied between neighboring transmitting points.

### Citation List

### Non-Patent Literature

Non-Patent Literature 1: 3GPP, TR 25.912 (V7.1.0), "Feasibility Study for Evolved UTRA and UTRAN," Sept. 2006

### Summary of Invention

### Technical Problem

However, in TDD in the LTE-A system, in order to allow efficient use of radio resources, a study is in progress to change the DL and UL transmission ratios dynamically or semi-statically in the time region, per transmitting/receiving point -- that is, change the DL/UL configuration to apply per transmitting/receiving point. When different DL/UL configurations are applied between neighboring transmitting/receiving points, cases might occur where, in the same time region/frequency region, a DL subframe and a UL subframe are transmitted at the same time between neighboring transmitting/receiving points (cases where uplink signals and downlink signals are transmitted at the same time).

In this case, depending on the location and transmission power of each transmitting/receiving point (or user terminal) and so on, there is a threat that interference is produced between transmitting/receiving points, between user terminals and so on and the performance of communication quality deteriorates.

The present invention has been made in view of the above, and it is therefore an object of the present invention to provide a radio communication method, a radio communication system, a radio base station and a user terminal that can reduce the impact of interference even when different DL/UL configurations are applied between neighboring transmitting/receiving points (radio base stations).

### Solution to Problem

The radio communication method of the present invention is a radio communication method in a radio communication system in which a plurality of radio base stations that communicate with a user terminal by means of time division duplexing each change the DL/UL configuration independently, and this radio communication method includes the steps in which: each radio base station: measures interference levels from other radio base stations; and transmits a change request signal to request a change of the DL/UL configuration and/or a change of transmission power to the other radio base stations, based on the measured interference levels; and the other radio base stations, having received the change request signal, change the DL/UL configuration and/or transmission power and communicate with the user terminal.

### Advantageous Effects of Invention

According to the present invention, it is possible to reduce the impact of interference even when different DL/UL configurations are applied between neighboring transmitting/receiving points (radio base stations).

### Brief Description of Drawings

FIG. 1 is a diagram to explain examples of DL/UL configurations in TDD;
FIG. 2 provides diagram to show examples of a radio communication system where different DL/UL configurations are applied between neighboring radio base stations;
FIG. 3 illustrates examples of a radio communication system and a sequence diagram of a radio communication method according to the present embodiment;
FIG. 4 illustrates examples of a radio communication system and a sequence diagram of a radio communication method according to the present embodiment;
FIG. 5 illustrates examples of a radio communication system and a sequence diagram of a radio communication method according to the present embodiment;
FIG. 6 illustrates examples of a radio communication system and a sequence diagram of a radio communication method according to the present embodiment;
FIG. 7 provides diagrams to show examples of a radio communication system having a centralized control base station according to the present embodiment;
FIG. 8 is an example of a sequence diagram to show a radio communication method in a radio communication system having a centralized control base station according to the present embodiment;
FIG. 9 is a diagram to explain an overall configuration of a radio base station;
FIG. 10 is a functional block diagram corresponding to a baseband processing section of a radio base station;
FIG. 11 is a diagram to explain an overall configuration of a user terminal; and
FIG. 12 is a functional block diagram corresponding to a baseband processing section of a user terminal;

### Description of Embodiments

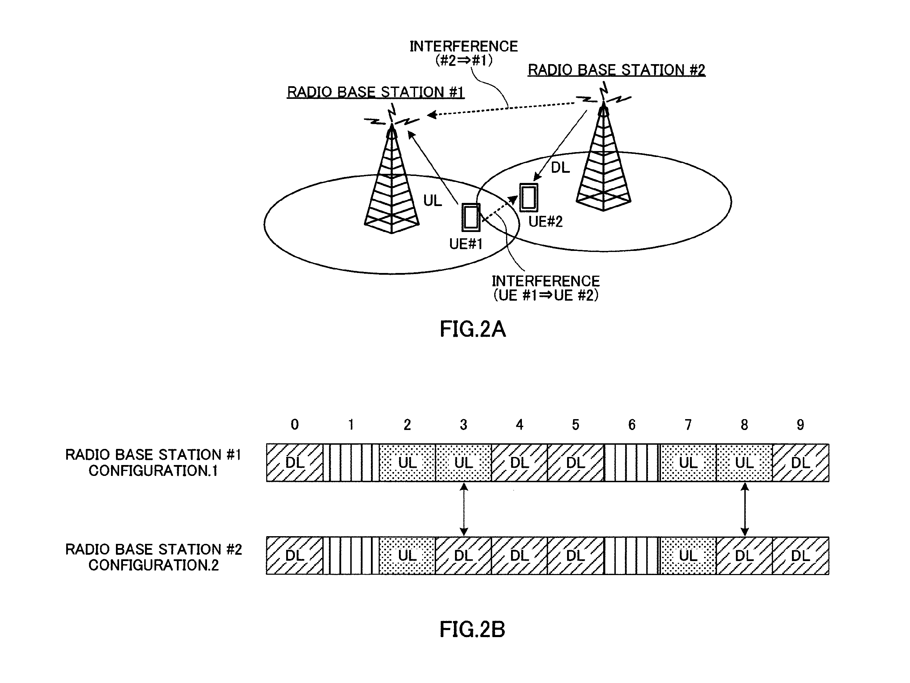

First, an example of a radio communication system where the present embodiment is applied will be described with reference to FIG. 2A. The radio communication system shown in FIG. 2A is formed to include a plurality of transmitting/receiving points (here, radio base stations #1 and #2), and user terminals #1 and #2 that communicate with radio base stations #1 and #2.

Also, in the radio communication system, radio communication between radio base station #1 and user terminal #1 (between radio base station #2 and user terminal #2 ) is conducted by means of time division duplexing (TDD). That is, in radio base stations #1 and #2, the same frequency region is applied to DL and UL transmission, and transmission from each radio base station is conducted by dividing between DL and UL in the time domain.

In this case, as noted earlier, if different DL/UL configurations are applied between neighboring radio base stations #1 and #2, in predetermined subframes, there is a threat of deterioration of communication quality performance due to interference between radio base stations #1 and #2, interference between user terminals #1 and #2, and so on.

For example, when, as shown in FIG. 2B, in a given period (here, one frame), radio base station #1 adopts DL/UL configuration 1 and radio base station #2 adopts DL/UL configuration 2, in subframes #3 and #8, radio base station #1 carries out UL transmission and radio base station #2 carries out DL transmission. That is, in the same time regions and in the same frequency regions, downlink signals are transmitted from radio base station #2 to user terminal #2, while uplink signals are transmitted from user terminal #1 to radio base station #1.

In this case, the downlink signals that are transmitted from radio base station #2 to user terminal #2 become interference against the uplink signals transmitted from user terminal #1 to radio base station #1 (interference between radio base stations #1 and #2). Also, the uplink signals that are transmitted from user terminal #1 to radio base station #1 become interference against the downlink signals transmitted from radio base station #2 to user terminal #2 (interference between user terminals #1 and #2). As a result of this, there is a threat that the received quality of radio base station #1 and the received quality of user terminal #2 lower in subframes #3 and #8.

So, the present inventors have found out that, by allowing each radio base station to adequately control the DL/UL configuration, the transmission power of the radio base station, the transmission power of user terminals and so on, taking into account the interference level between transmitting/receiving points (radio base stations) or between user terminals, it is possible to reduce the impact of interference even when different DL/UL configurations are applied between neighboring transmitting/receiving points.

Now, the present embodiment will be described below in detail with reference to the accompanying drawings. Note that, although examples with two or three transmitting/receiving points (radio base stations) will be described herein, the number of transmitting/receiving points which the present invention can employ is by no means limited to these. Also, although configurations that are defined in the LTE system (see FIG. 1) will be described herein as the DL/UL configurations that each transmitting/receiving point may adopt, the DL/UL configurations that each transmitting/receiving point can adopt are by no means limited to these. With the radio communication system of the present embodiment, each transmitting/receiving point is also able to set an adequate DL/UL configuration depending on the communication environment.

### (First Example)

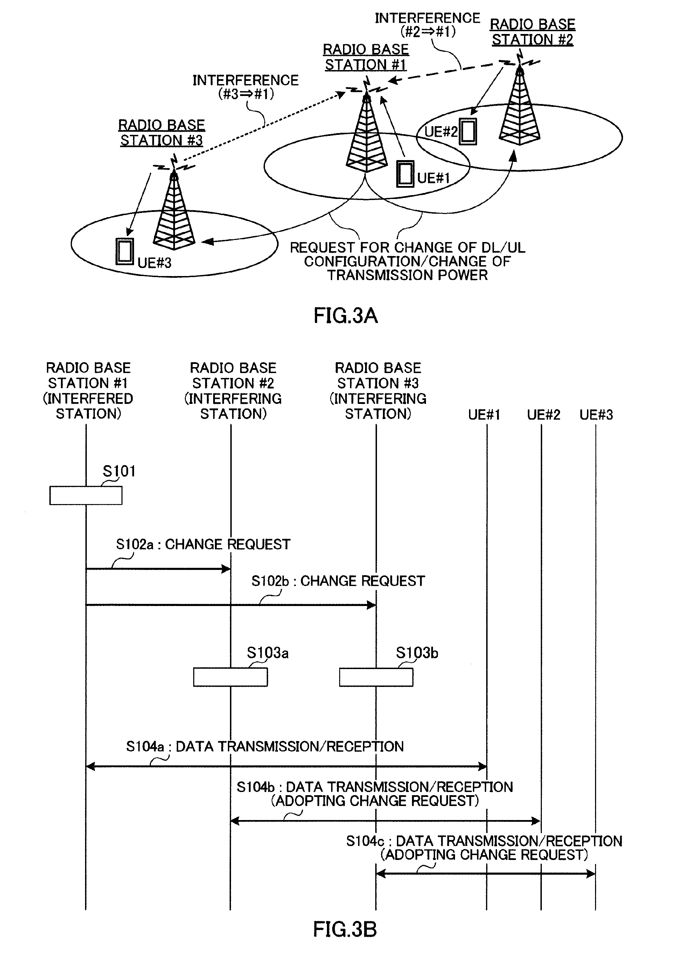

FIG. 3A shows an example of a radio communication system according to a first example. The radio communication system of FIG. 3A is formed to include a plurality of transmitting/receiving points (here, radio base stations #1 to #3) and user terminals #1 to #3 that connect with radio base stations #1 to #3, respectively. Note that radio base stations #1 to #3 are able to communicate information with each other through wire connection such as X₂ signaling, optical fiber and so on, or through wireless connection.

To radio communication between radio base station #1 and user terminal #1, between radio base station #2 and user terminal #2, and between radio base station #3 and user terminal #3, time division duplexing (TDD) is applied. Also, in the radio communication system shown in FIG. 3A, radio base stations #1 to #3 separately (independently) change and control the DL and UL transmission ratio (DL/UL configuration) in the time domain. In this case, radio base stations #1 to #3 may each select an arbitrary DL/UL configuration from the DL/UL configurations that are defined in advance (see FIG. 1). It is also possible to determine the DL/UL configuration in an arbitrary manner depending on the communication environment and so on.

When different DL/UL configurations are applied between neighboring radio base stations #1 to #3, downlink signals and uplink signals are transmitted in the same frequency region/the same time region between neighboring radio base stations (or between cells). For example, as shown in FIG. 3A, downlink signals transmitted from other radio base stations #2 and #3 to user terminals #2 and #3 separately become interference signals against radio base station #1 that receives uplink signals from user terminal #1.

So, with the first example, based on the level of interference which each radio base station receives from other different radio base stations, each radio base station requests the other radio base stations to change the DL/UL configuration and/or transmission power, thereby reducing the impact of interference.

Now, a case will be described below with reference to FIG. 3B where a radio base station #1 reports a request for a change of the DL/UL configuration and/or a change of transmission power (hereinafter also referred to simply as "change request") to other radio base stations #2 and #3, based on the interference level from those other radio base stations #2 and #3. Note that, although cases will be shown in the following description where radio base station #1 (the interfered station in FIG. 3A) transmits a change request signal to other radio base stations #2 and #3 (the interfering stations in FIG. 3A), the other radio base stations #2 and #3 may also perform the same process as by radio base station #1.

First, radio base station #1 measures the interference level from other radio base stations #2 and #3 (step S101). Note that the interference level according to the present embodiment refers to, for example, path loss, penetration loss, antenna gain and so on. For example, the path loss of an uplink channel (between radio base station #1 and user terminal #1) may be measured. In this case, the resulting interference level is the total value of the interference levels from other radio base stations #2 and #3.

Also, in step S101, radio base station #1 determines whether or not the interference level that is measured (for example, the total value of the levels of interference from radio base stations #2 and #3) is greater than a predetermined reference value (threshold value #1) regarding the interference level. Threshold value #1 is the reference value for determining the impact of interference from other radio base stations #2 and #3 to radio base station #1, and radio base station #1 determines whether or not to issue a change request based on threshold value #1.

Note that the predetermined reference value (threshold value #1) may be common between radio base stations or may differ between radio base stations. Also, the predetermined reference value (threshold value #1) may be configured to be reported to radio base station #1 through broadcast signals, higher layer signaling (for example, RRC signaling) and so on. Also, the predetermined reference value (threshold value #1) may be configured to be reported to radio base station #1 through downlink control signals (DCI) that are transmitted via downlink control channels (PDCCH, ePDCCH) and so on. Also, the predetermined reference value (threshold value #1) may be reported to radio base station #1 via X₂ signaling, optical fiber and so on. Besides, it is also possible to memorize threshold value #1 in a memory section of radio base station #1 in advance, so that this radio base station #1 can apply threshold value #1 that is memorized.

Note that the PDCCH (downlink control channel) is a downlink control channel to be placed over a predetermined number of OFDM symbols (one to three OFDM symbols) from the beginning of a subframe, and is a control channel that is time-division-multiplexed with the PDSCH (downlink shared data channel). Also, an ePDCCH (also referred to as an "enhanced downlink control channel," "E-PDCCH," "Enhanced PDCCH," "FDM-type PDCCH," "UE-PDCCH" and so on) is a control channel that is placed to be frequency-division-multiplexed with the PDSCH.

When the total value of the interference levels from other radio base stations #2 and #3 is greater than a predetermined reference value (threshold value #1), downlink signals transmitted from other radio base stations #2 and/or #3 have impact on radio base station #1 that receives uplink signals transmitted from user terminal #1. In this case, radio base station #1 requests other radio base stations #2 and #3 to change the DL/UL configuration and/or change the transmission power (steps S102a and S102b).

For example, when the interference level from other radio base stations #2 and #3 is high, radio base station #1 transmits a change request signal to request other radio base stations #2 and #3 to reduce the number of DL subframes and/or transmission power. Alternatively, radio base station #1 transmits a change request signal to request a change of the DL/UL configuration to other radio base stations #2 and #3, so that other radio base stations #2 and #3 adopt the same DL/UL configuration as in radio base station #1.

Other radio base stations #2 and #3 having received the change request signal from radio base station #1 determines whether or not to comply with the change request (steps S103a and S103b). With the first example, radio base stations #2 and #3 having received a change request signal comply with the change request and change the DL/UL configuration and/or transmission power. For example, when there is a request from radio base station #1 to reduce the number of DL subframes, radio base stations #2 and #3 reduce predetermined DL subframe (DL subframes that are transmitted in the same time regions with UL subframes of radio base station #1) from the subframes (that is, do not transmit downlink signals).

After that, radio base stations #1 to #3 each adopt a DL/UL configuration and/or transmission power that reflect change requests reported from the other radio base stations, and conduct radio communication with serving user terminals #1 to #3, respectively (steps S104a to S104c). In this way, even when different DL/UL configurations are applied between neighboring transmitting/receiving points (radio base stations), it is still possible to reduce the interference between the neighboring transmitting/receiving points by reporting a change request and controlling transmission parameters based on the interference level from other radio base stations.

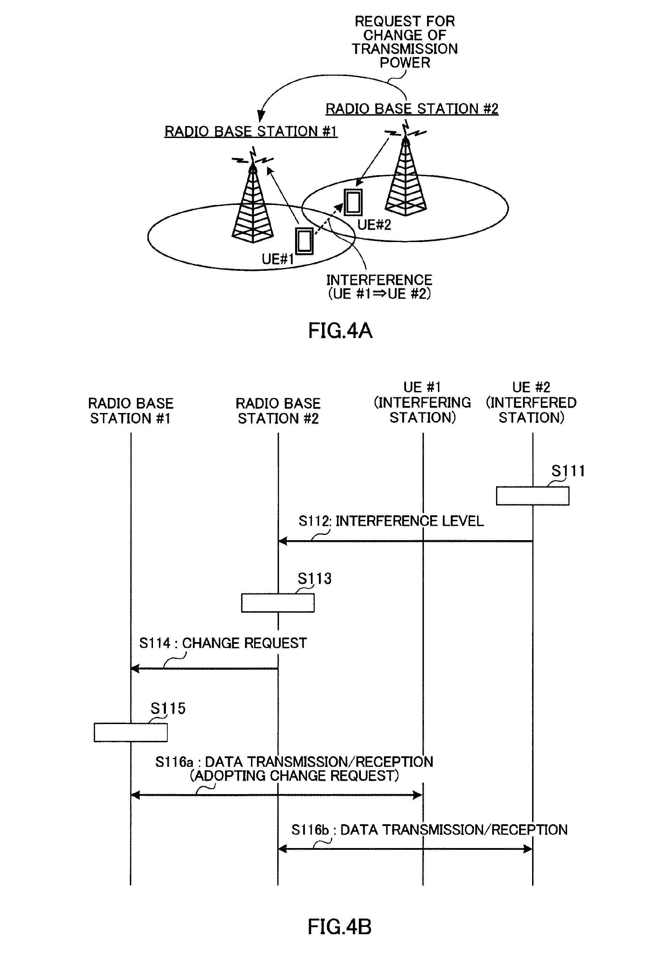

Note that, although a method of controlling interference between radio base stations by reporting a change request between different transmitting/receiving points has been described above with FIG. 3, the present embodiment is equally applicable to reduce interference between user terminals as well. Now, a case will be described below with reference to FIG. 4 where, based on the interference level from other user terminals, each user terminal reports a request to change the transmission power of the other user terminals to the radio base stations to which these other user terminals are connected.

Note that, although a case will be presented with the description of FIG. 4 where user terminal #2 (the interfered station in FIG. 4A) reports a request for a change of the transmission power of user terminal #1 (the interfering station in FIG. 4A) to radio base station #1 via radio base station #2. User terminal #1 is also able to perform the same process as by user terminal #2.

First, user terminal #2 measures the interference level from another user terminal #1 connected to different radio base station #1 (step S111). As noted earlier, the interference level refers to path loss, penetration loss, antenna gain and so on. For example, the path loss of a downlink channel (between radio base station #2 and user terminal #2) may be measured.

User terminal #2 generates information related to the interference level, and transmits this to radio base station #2 (step S112). Radio base station #2 determines whether or not the interference level is greater than a predetermined reference value (threshold value #1') based on the information related to the interference level transmitted from user terminal #2 (step S113). Note that threshold value #1' is the reference value for determining the impact of interference from another user terminal #1 to user terminal #2, so that whether or not to use a change request can be determined based on threshold value #1'.

Note that the information related to the interference level which user terminal #2 transmits to the connecting radio base station #2 (of the serving cell) may be the interference level measured in user terminal #2 itself, or may be the result of determining whether or not the interference level is greater than threshold value #1' in user terminal #2. In the latter case, when the interference level from user terminal #1 is greater than threshold value #1', user terminal #2 transmits a change request signal to request a change of the transmission power of the other user terminal # 1, to radio base station #2.

The predetermined reference value (threshold value #1') may be configured to be reported to user terminal #2 through broadcast signals, higher layer signaling (for example, RRC signaling) and so on. Also, the predetermined reference value (threshold value #1') may be configured to be reported to user terminal #2 through downlink control signals (DCI) that are transmitted via downlink control channels (PDCCH, ePDCCH) and so on. Besides, it is also possible to memorize threshold value #1' in a memory section of radio base station #2 or user terminal #2 in advance and apply this threshold value #1' that is memorized.

When the interference level that is measured is greater than threshold value #1', uplink signals transmitted from user terminal #1 to radio base station #1 have impact on downlink signals transmitted from radio base station #2 to user terminal #2. In this case, radio base station #2 requests radio base station #1 to lower the uplink signal transmission power of user terminal #1 (step S114).

Radio base station #1 having received the change request signal from radio base station #2 determines whether or not to comply with the change request (step S115). With the first example, radio base station #1 having received the report of the change request lowers the transmission power of user terminal #1 in compliance with the change request. After that, radio base stations #1 and #2 each set the transmission power of the serving user terminals based on change requests reported from other radio base stations, and conduct radio communication with serving user terminals #1 and #2, respectively (steps S116a and S116b). In FIG. 4B, the transmission power of user terminal #1 is set low, so that it is possible to reduce the impact of interference against user terminal #2.

Note that, with the first example, the control method for radio base stations, shown in FIG. 3 and related to changes of the DL/UL configuration and transmission power, and the control method for user terminals, shown in FIG. 4 and related to changes of transmission power and so on, may be combined as appropriate and executed. In this way, even when different DL/UL configurations are applied between neighboring radio base stations, it is still possible to effectively supress the decrease of communication quality due to interference, by controlling changes of the DL/UL configuration and/or transmission power based on the interference level between radio base stations and between user terminals.

### (Second Example)

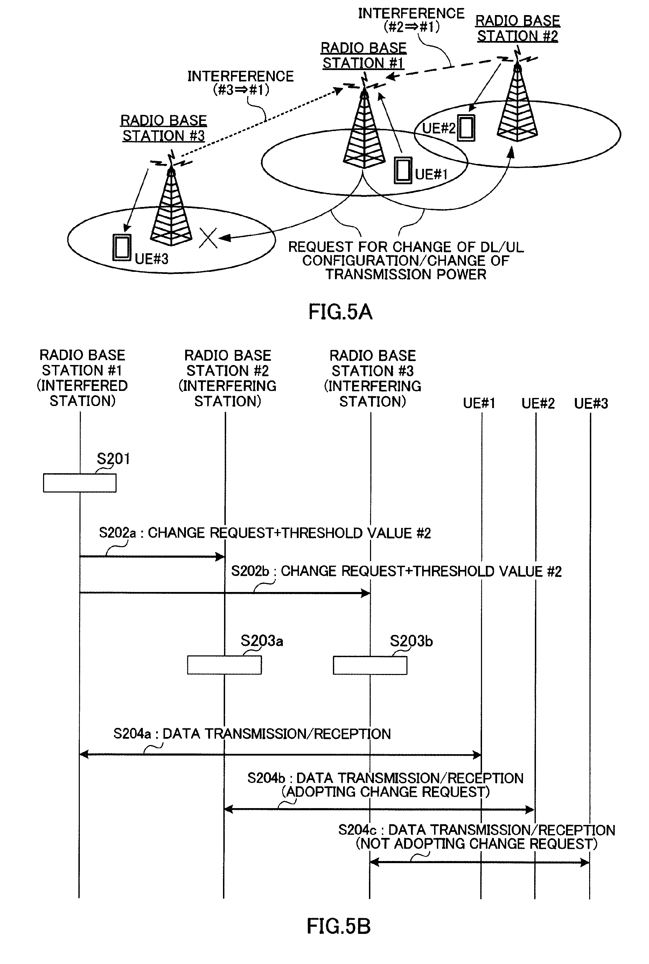

FIG. 5A shows an example of a radio communication system according to a second example. Similar to the above-described first example, the radio communication system of FIG. 5A is formed to include a plurality of transmitting/receiving points (here, radio base stations #1 to #3) and user terminals #1 to #3 that serve radio base stations #1 to #3, respectively.

With the second example, a radio base station, to which a request for a change of the DL/UL configuration and/or transmission power is reported from another radio base station, determines whether or not to comply with the change request depending on the reception level with respect to the target radio base station that sent the change request.

For example, when the interference level that is measured (for example, the total value of the levels of interference from radio base stations #2 and #3) is greater than a predetermined reference value (threshold value #1), radio base station #1 reports a change request to other radio base stations #2 and #3. Other radio base stations #2 and #3 measure the reception level with respect to radio base station #1, which is the target the request is addressed to, compares this reception level against a reference value (threshold value #2) that serves as the criterion for determining whether or not to adopt a change request, and determines whether or not to comply with the change request from radio base station #1.

The radio base station where the change request is reported determines adopting the change request depending on the reception level with respect to the target that sent the request, so that it is possible to selectively change the DL/UL configuration and transmission power of radio base stations having significant impact on the target that sent the request.

Now, a case will be described below with reference to FIG. 5B where radio base stations #2 and #3 determine adopting/not adopting a change request reported from radio base station #1 based on the reception level with respect to radio base station #1. Note that parts that are the same as in the first example will not be described again.

First, radio base station #1 measures the interference level from other radio base stations #2 and #3 (step S201). Also, in step S201, radio base station #1 determines whether or not the interference level that is measured is greater than a predetermined reference value (threshold value #1).

When the interference level is greater than the predetermined reference value (threshold value #1), radio base station #1 transmits change request signals to other radio base stations #2 and #3 (steps S202a and S202b). For example, when the total value of the levels of interference from other radio base stations #2 and #3 is greater than threshold value #1, radio base station #1 transmits change request signals to request other radio base stations #2 and #3 to reduce the number of DL subframes and/or transmission power. Alternatively, radio base station #1 requests a change of the DL/UL configuration to other radio base stations #2 and #3, so that other radio base stations #2 and #3 adopt the same DL/UL configuration as in radio base station #1.

Furthermore, with the second example, in steps S202a and S202b, it is possible to transmit a change request signal from radio base station #1 to other radio base stations #2 and #3, and also report information related to the reference value (threshold value #2) that serves as the criterion for determining whether or not to adopt the change request.

Radio base stations #2 and #3 having received the change request from radio base station #1 each compare the reception level from radio base station #1, which sent the request, and the reference value (threshold value #2), and determine whether or not to comply with the change request (steps S203a and S203b). To be more specific, radio base stations #2 and #3 each comply with the change request from radio base station #1 when the reception level with respect to radio base station #1 is greater than threshold value #2. On the other hand, when the reception level with respect to radio base station #1 is equal to or lower than threshold value #2, the impact upon radio base station #1 is little, and therefore radio base stations #2 and #3 do not comply with the change request.

Note that, although a case has been shown with FIG. 5B where the reference value (threshold value #2) is reported with a change request signal from radio base station #1, which sent the request, the method of reporting threshold value #2 is by no means limited to this. For example, base station apparatus #1 is able to assume a configuration to report threshold value #2 to other base station apparatuses #2 and #3 through broadcast signals, higher layer signaling (for example, RRC signaling) and so on. Besides, a configuration to report threshold value #2 to other base station apparatuses #2 and #3 through downlink control signals (DCI) that are transmitted via downlink control channels (PDCCH, ePDCCH) and so on is also possible. Also, reporting may be sent to radio base station #1 via X₂ signaling, optical fiber and so on. Also, it is equally possible to memorize threshold value #2 in a memory section of other radio base stations #2 and #3 in advance, and adopt this threshold value #2 as the criterion for determining whether or not to comply with a change request that is reported from radio base station #1.

After that, radio base stations #1 to #3 each adopt a DL/UL configuration and transmission power that are set in accordance with change request signals reported from the other radio base stations, and conduct radio communication with serving user terminals #1 to #3, respectively (steps S204a to S204c).

In this way, by determining whether or not to adopt a change request based on the reception level with respect to the target radio base station that sent the request, it is possible to selectively change the DL/UL configurations and change the transmission power of radio base stations where the impact of interference is significant.

### (Third Example)

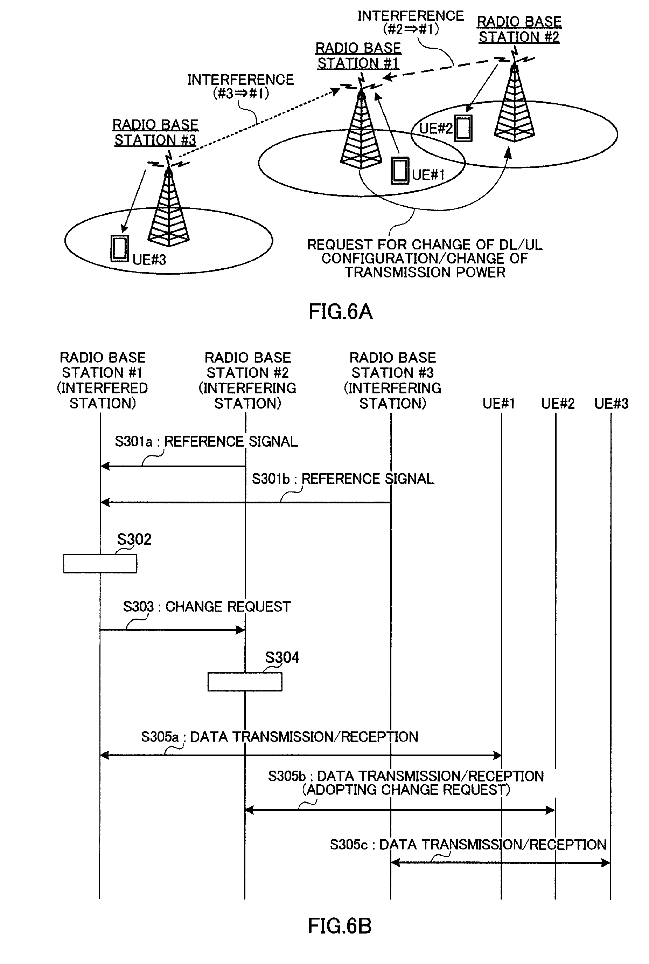

FIG. 6A shows an example of a radio communication system according to a third example. Similar to the above-described first example and second example, the radio communication system of FIG. 6A is formed to include a plurality of transmitting/receiving points (here, radio base stations #1 to #3) and user terminals #1 to #3 that serve radio base stations #1 to #3, respectively.

With the third example, each radio base station measures the interference level (interference power) for every different radio base station using reference signals for interference measurement, and reports a change request to radio base stations where the interference level exceeds predetermined reference value (threshold value #1) separately.

For example, radio base station #1 measures the interference level (interference power) with respect to each of radio base stations #2 and #3, using cell-specific (or transmitting/receiving point-specific, radio base station-specific and so on) reference signal sequences transmitted from radio base stations #2 and #3 separately. Then, given the interference levels from radio base stations #2 and #3, radio base station #1 requests a radio base station (for example, radio base station #2) where the interference level is greater than a predetermined reference value (threshold value #1) to change the DL/UL configuration and/or change the transmission power, independently. By this means, each radio base station is able to selectively report a change request only to radio base stations where the impact of interference is significant, among a plurality of neighboring radio base stations.

Now, a case will be described below with reference to FIG. 6B where radio base station #1 measures the interference level from each of radio base stations #2 and #3 based on interference measurement reference signals, and sends change requests separately. Note that parts that are the same as in the above first and second examples will not be described again.

First, radio base station #1 receives interference measurement reference signals transmitted from other radio base stations #2 and #3 (steps S301a and S301b). Following this, radio base station #1 measures the interference level (interference power) of each of radio base stations #2 and #3 based on the reference signals (step S302). Also, in step S302, radio base station #1 determines whether or not the interference level from each of radio base stations #2 and #3 is greater than a predetermined reference value (threshold value #1).

A radio base station to cause a greater interference level than threshold value #1 against radio base station #1 may have impact on radio base station #1 that receives uplink signals transmitted from user terminal #1. Consequently, radio base station #1 operates to reduce the interference of radio base stations where the interference level is greater than threshold value #1, separately.

For example, when the interference level from radio base station #2 is higher than threshold value #1 and the interference level from radio base station #3 is lower than threshold value #1, radio base station #1 selectively transmits a change request signal to radio base station #2 (step S303). Meanwhile, radio base station #1 does not transmit a change request signal to radio base station #3.

Radio base station #2 having received the change request signal transmitted from radio base station #1 complies with the change request and applies changes such as a change of the DL/UL configuration and/or a change to lower the transmission power (step S304). After that, radio base stations #1 to #3 each adopt a DL/UL configuration and transmission power that are set in accordance with change request signals transmitted from the other radio base stations, and conduct radio communication with serving user terminals #1 to #3, respectively (steps S305a to S305c).

In this way, each radio base station measures the interference level per radio base station based on reference signals, and selectively transmits change request signals to the radio base stations where the interference level is high, so that it is possible to omit the transmission of change request signals to radio base stations where the impact of interference is insignificant.

Note that, although a method to control interference between radio base stations has been described above with FIG. 6, the present invention is equally applicable to interference between user terminals as well.

For example, in step S113 of above FIG. 4B, when information related to the interference level reported from user terminal #2 to radio base station #2 (for example, the interference level) is equal to or lower than threshold value #1', radio base station #2 does not transmit a change request signal to radio base station #1. Alternatively, when the interference level measured in user terminal #2 is equal to or lower than a predetermined reference value, user terminal #2 does not report information related to the interference level to radio base station #2. In this way, information related to the interference level is transmitted only when the interference level from other user terminals is high, so that efficient use of radio resources is made possible.

### (Fourth Example)

Although cases have been described with the above first example to third example where each radio base station reports a request for a change of the DL/UL configuration and/or transmission power directly to other radio base stations, the present embodiment is by no means limited to this. For example, a configuration to provide a centralized control base station that puts together the levels of interference measured by each separate radio base station (or change requests) and controls the DL/UL configuration and transmission power of each radio base station based on the gathered information, may be possible. Now, a radio communication having a centralized control base station will be described.

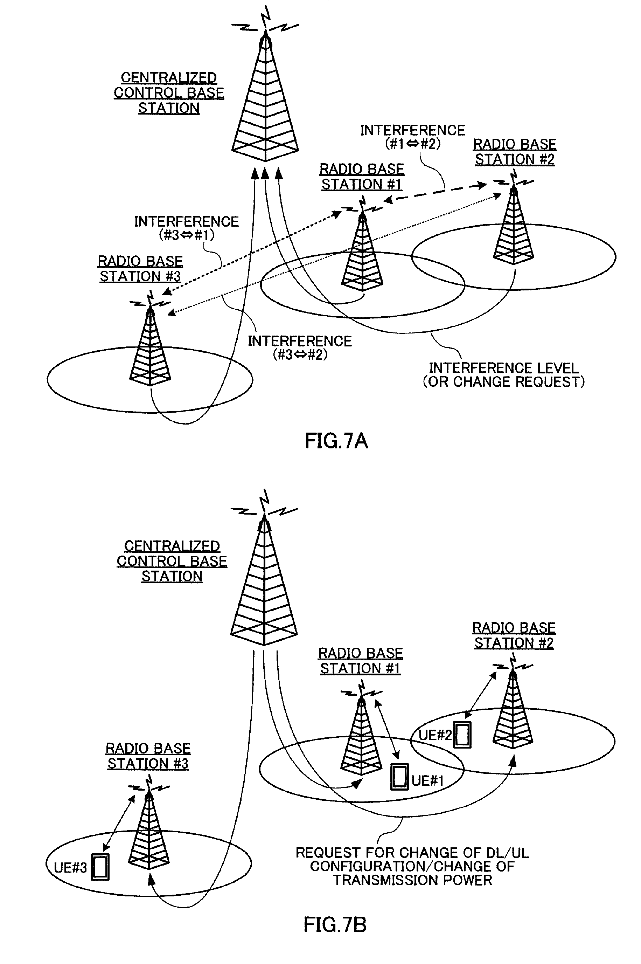

FIG. 7 shows an example of a radio communication system according to a fourth example. The radio communication system of FIG. 7 is formed to include a plurality of transmitting/receiving points (here, radio base stations #1 to #3), user terminals #1 to #3 that serve radio base stations #1 to #3 respectively, and a centralized control base station that controls the DL/UL configuration and/or transmission power of each radio base station #1 to #3. Radio base stations #1 to #3 and the centralized control base station are able to communicate information with each other through wire connection such as X₂ signaling and optical fiber, or through wireless connection.

With the fourth example, radio base stations #1 to #3 each measure the interference level from other radio base stations, and reports information related to the interference level to the centralized control base station (see FIG. 7A). The centralized control base station transmits a change request signal to radio base stations #1 to #3, as appropriate, based on the information related to the interference level reported from radio base stations #1 to #3 respectively (see FIG. 7B).

For example, when the total value of the levels of interference from other radio base stations #2 and #3 at radio base station #1 is greater than a predetermined reference value (threshold value 1), a change request signal is transmitted to other radio base stations #2 and #3. To be more specific, it is possible to request other radio base stations #2 and #3 to adopt the same DL/UL configuration as in radio base station #1, lower the transmission power, and so on.

Note that the information related to the interference level that is transmitted from radio base stations #1 to #3 to the centralized control base station may be the interference levels themselves measured in radio base stations #1 to #3, or may be the results of determining whether or not the interference level is greater than a predetermined reference value (threshold value #1) in radio base stations #1 to #3.

For example, radio base station #1, where the total value of the levels of interference from other radio base stations #2 and #3 is greater than threshold value #1, transmits a change request signal to request radio base stations #2 and #3 to change the DL/UL configuration and transmission power, to the centralized control base station. On the other hand, radio base stations #2 and #3, where the total value of the interference levels is lower than threshold value #1, do not transmit change request signals.

Note that radio base stations #2 and #3 having received the change request signal from the centralized control base station comply with the change request and change the DL/UL configuration, transmission power and so on. In this case, as has been shown with the second example above, radio base stations #2 and #3 may determine whether or not to comply with the request depending on the reception level with respect to radio base station #1, which sent the request. Alternatively, it is also possible that each radio base station reports reception levels with respect to other radio base stations to the centralized control base station, and the centralized control base station selects a radio base station to transmit a change request signal to, taking into account the reception level of each radio base station.

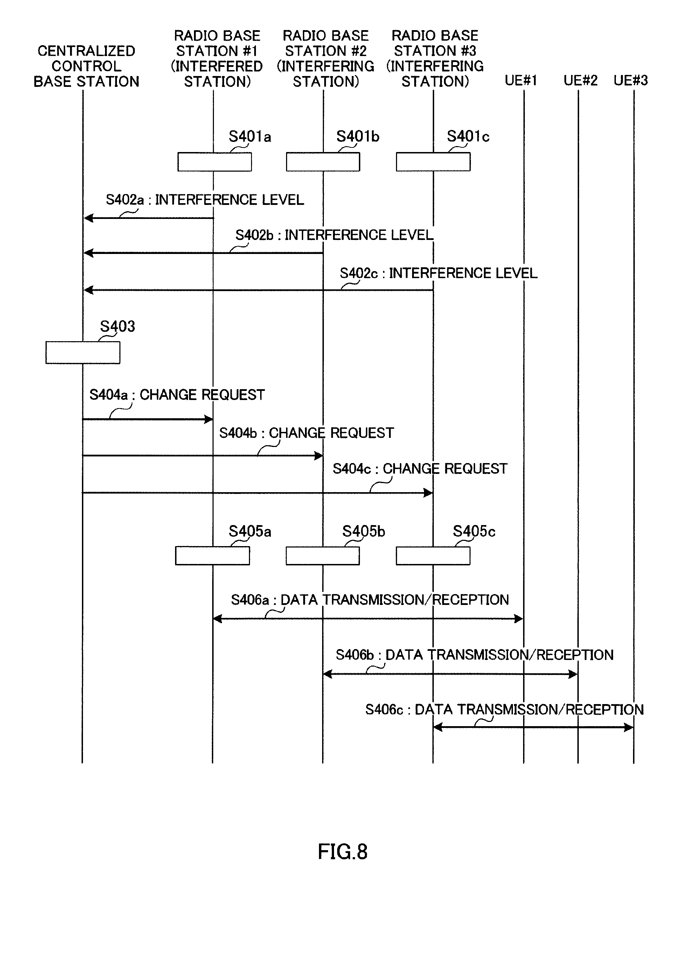

Now, a case will be described below with reference to FIG. 8 where the centralized control base station controls the transmission of change request signals to each radio base station based on information related to the interference level reported from radio base stations #1 to #3.

First, radio base stations #1 to #3 each measure the total value of the levels of interference from other radio base stations (steps S401a to S401c). Following this, radio base stations #1 to #3 each report information related to the interference level (for example, the measured interference level) to the centralized control base station (steps S402a to 402c). The centralized control base station determines whether or not the interference levels reported from radio base stations #1 to #3 are greater than threshold value #1, and selects the radio base stations to transmit a change request signal to (step S403).

Note that it is also possible to allow each radio base station, after having measured the interference level, to determine whether or not the interference level is greater than threshold value #1 and report a change request for other radio base stations to the centralized control base station.

When there is a radio base station where the interference level is greater than a predetermined interference level value (threshold value #1), the centralized control base station requests other radio base stations to change the DL/UL configuration and/or change the transmission power (steps S404a to S404c). For example, when the interference level from other radio base stations against radio base station #1 alone is greater than threshold value #1, a change request signal is transmitted to other radio base stations #2 and #3. Also, when there is a plurality of interference levels (for example, at radio base stations #1 and #2) to exceed threshold value #1, it is possible to determine that interference is produced between these plurality of radio base stations, and report a change request to adopt the same DL/UL configuration to these radio base stations.

The radio base stations where the change request is reported from the centralized control base station comply with the change request and change the DL/UL configuration and/or transmission power (steps S405a to S405c). After that, radio base stations #1 to #3 each adopt a DL/UL configuration and transmission power that reflect the change request, and conduct radio communication with serving user terminals #1 to #3, respectively (steps S406a to S406c).

In this way, even when different DL/UL configurations are applied between neighboring transmitting/receiving points (radio base stations), it is still possible to effectively reduce the decrease of communication quality due to interference, by putting together information related to the interference level from other radio base stations in a centralized control base station, and controlling the DL/UL configuration and/or transmission power of each radio base station.

Note that, although a method to control interference between radio base stations has been described with FIG. 8, the present invention is equally applicable to interference between user terminals as well.

For example, from each user terminal, information related to the interference level from other user terminals connected to different radio base stations may be reported to a centralized control base station, directly or via the connecting radio base station. Then, the centralized control base station can control each user terminal's transmission power based on the information related to the interference level against each user terminal and a predetermined reference value (threshold value #1'). In this case, the centralized control base station can transmit a change request signal to change the transmission power of a user terminal, to the radio base station to which the user terminal having to change the transmission power is connected.

### (Fifth Example)

With the fifth example, a case will be described where each radio base station measures the interference level (interference power) with respect to every different radio base station using interference measurement reference signals, and reports information about the radio base stations where the interference level is greater than a predetermined reference value (threshold value #1) to a centralized control base station selectively.

For example, in the radio communication system shown in above FIG. 7, radio base stations #1 to #3 each measure the interference level (interference power) with respect to every one of other radio base stations using cell-specific (or transmitting/receiving point-specific, radio base station-specific and so on) reference signal sequences. That is, radio base station #1 measures the interference levels of radio base stations #2 and #3 separately, radio base station #2 measures the interference levels of radio base stations #1 and #3 separately, and radio base station #3 measures the interference levels of radio base stations #1 and #2 separately.

Then, the levels of interference given from the other radio base stations, only information that relates to interference levels greater than a predetermined value (threshold value #1) is reported to the centralized control base station, selectively. For example, in the case illustrated in FIG. 7, radio base station #1 reports only the interference level from radio base station #2, to the centralized control base station. Meanwhile, radio base stations #2 and #3 report no interference level (that is, perform only step S402a in steps S402a to S402c of FIG. 8). By this means, each radio base station has to only transmit information related to interference levels with respect to radio base stations where the impact of interference is significant, among a plurality of neighboring radio base stations, to the centralized control base station.

The centralized control base station transmits a change request signal to each radio base station based on the information related to the interference level transmitted from the radio base stations. For example, in the case illustrated in FIG. 7, the centralized control base station transmits a change request signal only to radio base station #2 (that is, perform only step S404b, in steps S404a to S404c of FIG. 8). The centralized control base station reports, for example, to radio base station #2, to adopt the same DL/UL configuration as in radio base station #1, reduce the DL subframes in the same time regions as UL subframes of radio base station #1, and/or lower the transmission power.

Radio base station #2 having received the change request signal transmitted from the centralized control base station complies with the change request and changes the DL/UL configuration, transmission power and so on (step S405b in FIG. 8). By this means, it is possible to reduce the number of the change request signals to transmit from the centralized control base station.

After that, radio base stations #1 to #3 each adopt a DL/UL configuration and transmission power that reflect the change request, and conduct radio communication with serving user terminals #1 to #3, respectively (that is, perform steps S406a to S406c of FIG. 8). In this way, even when different DL/UL configurations are applied between neighboring radio base stations, it is still possible to reduce unnecessary signal transmission by reporting information related to interference levels to the centralized control base station separately based on the interference level from other radio base stations.

Note that, although a method to control interference between radio base stations has been described above, the present invention is equally applicable to interference between user terminals as well.

For example, when, from each user terminal, information related to the interference level from other user terminals connected to different radio base stations is reported to a centralized control base station, directly or via the connecting radio base station, this is reported to the centralized control base station only when the interference level from other user terminals is equal to or greater than a predetermined reference value. By this means, it is possible to allow efficient use of radio resources.

An overall configuration of a radio base station according to the present embodiment will be described with reference to FIG. 13. Note that, in the following description, the radio base stations and the centralized control base station can be configured alike and therefore will be described as simply "radio base station 20."

Note that the radio base stations and the centralized control base station can communicate information with each other via a wired link such as X₂ signaling, optical fiber and so on. Also, the radio base stations may be connected to the centralized control base station via a wireless link. Also, the radio base stations and the centralized control base station are each connected to a higher station apparatus (not illustrated) on the core network. The higher station apparatus may be, for example, an access gateway apparatus, a mobility management entity (MME) and so on, but is by no means limited to these.

Also, the radio base stations may be base stations referred to as "eNodeBs," "transmitting/receiving points" and so on, or may be base stations that have local cover areas and are referred to as "pico base stations," "femto base stations," "Home eNodeBs," "RRHs (Remote Radio Heads)," "micro base stations," "transmitting/receiving points," and so on. Also, the centralized control base station is a control station to control the radio base stations, and, if having radio base station control functions, may be a base station referred to as "eNodeB," "transmitting/receiving point" and so on, or may be a different device (for example, a device to be provided on the core network, an RNC (Radio Network Controller) and so on).

A radio base station 20 has transmitting/receiving antennas 201, amplifying sections 202, transmitting/receiving sections (transmitting sections/receiving sections) 203, a baseband signal processing section 204, a call processing section 205, and a transmission path interface 206. Transmission data that is transmitted from the radio base station 20 to user terminals on the downlink is input from the higher station apparatus 30, into the baseband signal processing section 204, via the transmission path interface 206.

In the baseband signal processing section 204, a downlink data channel signal is subjected to a PDCP layer process, division and coupling of transmission data, RLC (Wireless link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process, and a precoding process. Furthermore, a signal of a physical downlink control channel, which is a downlink control channel, is also subjected to transmission processes such as channel coding and an inverse fast Fourier transform.

Also, the baseband signal processing section 204 reports control information for allowing each user terminal 10 to perform radio communication with the radio base station 20, to the user terminals 10 connected to the same cell, by a broadcast channel. The information for allowing communication in the cell includes, for example, the uplink or downlink system bandwidth, root sequence identification information (root sequence indices) for generating random access preamble signals in the PRACH (Physical Random Access Channel), and so on.

Baseband signals that are output from the baseband signal processing section 204 are converted into a radio frequency band in the transmitting/receiving sections 203. The amplifying sections 202 amplify the radio frequency signals having been subjected to frequency conversion, and output the results to the transmitting/receiving antennas 201.

Meanwhile, as for signals to be transmitted from user terminals to the radio base station 20 on the uplink, radio frequency signals that are received in the transmitting/receiving antennas 201 are amplified in the amplifying sections 202, converted into baseband signals through frequency conversion in the transmitting/receiving sections 203, and input in the baseband signal processing section 204.

The baseband signal processing section 204 performs an FFT process, an IDFT process, error correction decoding, a MAC retransmission control receiving process, and RLC layer and PDCP layer receiving processes of the transmission data that is included in the baseband signals received on the uplink. The decoded signals are transferred to the higher station apparatus through the transmission path interface 206.

The call processing section 205 performs call processing such as setting up and releasing communication channels, manages the state of the radio base station 20 and manages the radio resources.

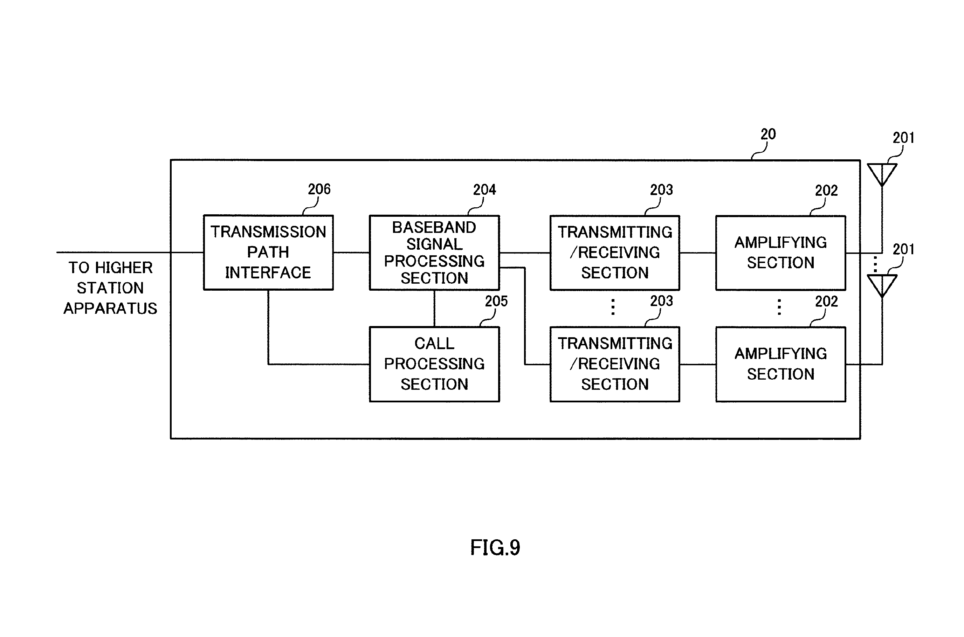

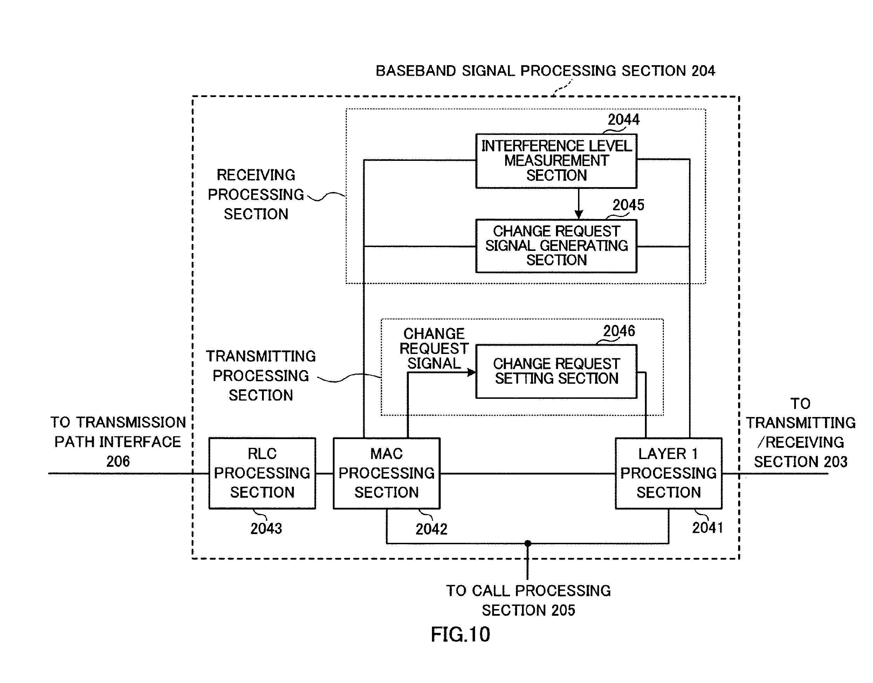

FIG. 10 is a block diagram to show a configuration of a baseband signal processing section in the radio base station shown in FIG. 9. The baseband signal processing section 204 is primarily formed with a layer 1 processing section 2041, a MAC processing section 2042, an RLC processing section 2043, an interference level measurement section 2044, a change request signal generating section 2045 and a change request setting section 2046.

The layer 1 processing section 2041 mainly performs processes related to the physical layer. For example, the layer 1 processing section 2041 applies processes to signals received on the uplink, including channel decoding, a discrete Fourier transform (DFT), frequency demapping, an inverse fast Fourier transform (IFFT) and data demodulation. Also, the layer 1 processing section 2041 performs processes for signals to transmit on the downlink, including channel coding, data modulation, frequency mapping and an inverse fast Fourier transform (IFFT).

The MAC processing section 2042 performs processes for signals that are received on the uplink, including MAC layer retransmission control, scheduling for the uplink/downlink, transport format selection for the PUSCH/PDSCH, resource block selection for the PUSCH/PDSCH, and so on.

The RLC processing section 2043 performs, for packets that are received on the uplink/packets to transmit on the downlink, packet division, packet combining, retransmission control in the RLC layer and so on.

The interference level measurement section 2044 measures the interference level from other radio base stations. For example, with the above-described first example (see FIG. 3), the interference level measurement section 2044 in radio base station #1 measures the total value of the levels of interference from other radio base stations #2 and #3. For the measurement of the levels of interference, path loss, penetration loss, antenna gain and so on may be used, and, for example, the path loss of an uplink channel (between radio base station #1 and user terminal #1) may be measured.

Also, with the above-described third example (see FIG. 6), the interference level measurement section 2044 in radio base station #1 measures the interference level (interference power) with respect to each of radio base stations #2 and #3, using cell-specific (or transmitting/receiving point-specific, radio base station-specific, and so on) reference signal sequences transmitted from radio base stations #2 and #3 separately.

Based on the interference levels measured in the interference level measurement section 2044, the change request signal generating section 2045 generates change request signals to request a change of the DL/UL configuration and/or a change of transmission power to other base stations. For example, with the above-described first example (see FIG. 3), the change request signal generating section 2045 in radio base station #1 determines whether or not the total value of the levels of interference from other radio base stations #2 and #3 is greater than a predetermined reference value (threshold value #1), and, if it is, generates a change request signal.

In this case, the change request signal generating section 2045 in radio base station #1 generates a change request signal to request other radio base stations #2 and #3 to reduce the number of DL subframes and/or lower the transmission power. Alternatively, the change request signal generating section 2045 generates a change request signal to request other radio base stations #2 and #3 to change the DL/UL configuration so as to adopt the same DL/UL configuration as in radio base station #1. The change request signal generated in the change request signal generating section 2045 is transmitted to other radio base stations #2 and #3 by wire or by wireless.

Also, in the event of the above-described third embodiment (see FIG. 6), the change request signal generating section 2045 in radio base station #1 determines whether or not the interference level of each of radio base stations #2 and #3 is greater than a predetermined reference value (threshold value #1). Then, the change request signal generating section 2045 generates a change request signal for radio base station #2, where the interference level is greater than threshold value #1, and does not generate a change request signal for radio base station #3.

The change request setting section 2046 determines whether or not to comply with the change request based on change request signals transmitted from other radio base stations. In the event of complying with the change request, the change request setting section 2046 changes the DL/UL configuration and/or transmission power. For example, in the event of the above-described second example (see FIG. 5), the change request setting section 2046 in radio base stations #2 and #3 compares the reception level with respect to radio base station #1, which sent the request, against a reference value that serves as the criterion for determining whether or not to adopt a change request (threshold value #2), and complies with the change request when the reception level is greater than threshold value #2.

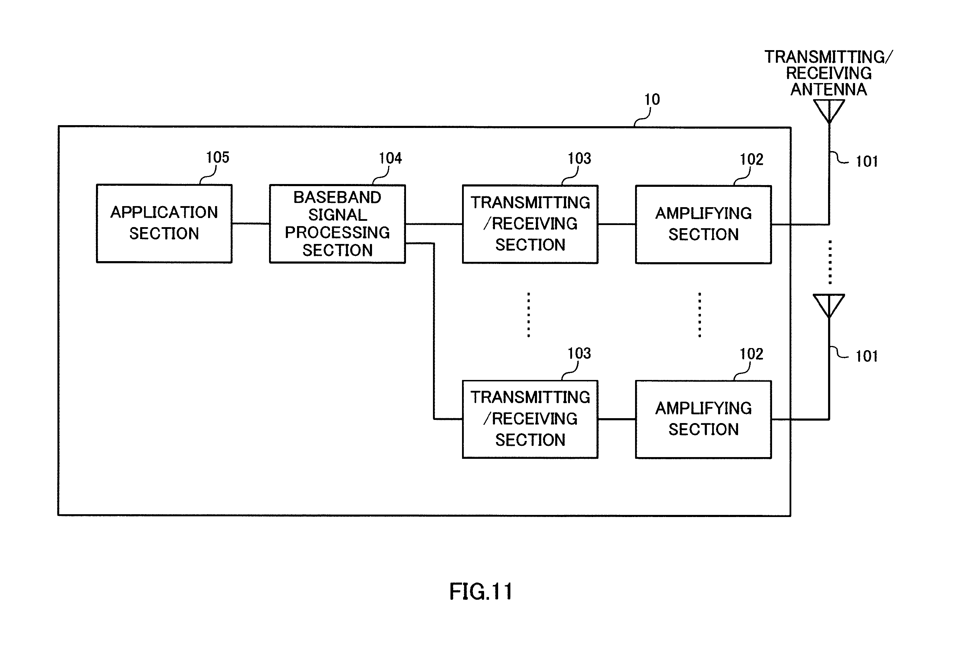

Next, an overall configuration of a user terminal according to the present embodiment will be described with reference to FIG. 11. A user terminal 10 has transmitting/receiving antennas 101, amplifying sections 102, transmitting/receiving sections (transmitting sections/receiving sections) 103, a baseband signal processing section 104, and an application section 105.

As for downlink data, radio frequency signals that are received in the transmitting/receiving antennas 101 are amplified in the amplifying sections 102, and converted into baseband signals through frequency conversion in the transmitting/receiving sections 103. The baseband signals are subjected to receiving processes such as an FFT process, error correction decoding and retransmission control, in the baseband signal processing section 104. In this downlink data, downlink transmission data is transferred to the application section 105. The application section 105 performs processes related to higher layers above the physical layer and the MAC layer, and so on. Also, in the downlink data, broadcast information is also transferred to the application section 105.

Meanwhile, uplink transmission data is input from the application section 105 into the baseband signal processing section 104. The baseband signal processing section 104 performs a mapping process, a retransmission control (HARQ) transmission process, channel coding, a DFT process, and an IFFT process. Baseband signals that are output from the baseband signal processing section 104 are converted into a radio frequency band in the transmitting/receiving sections 103. After that, the amplifying sections 102 amplify the radio frequency signals having been subjected to frequency conversion, and transmit the results from the transmitting/receiving antennas 101.

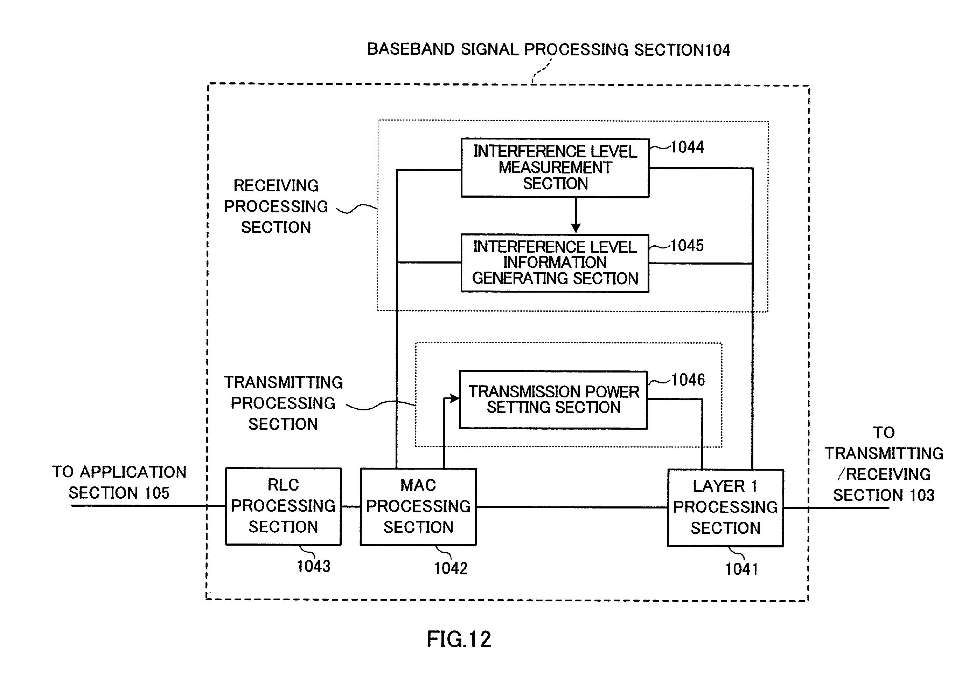

FIG. 12 is a block diagram to show a configuration of a baseband signal processing section in the user terminal shown in FIG. 11. The baseband signal processing section 104 is primarily formed with a layer 1 processing section 1041, a MAC processing section 1042, an RLC processing section 1043, an interference level measurement section 1044, an interference level information generating section 1045, and a transmission power setting section 1046.

The layer 1 processing section 1041 mainly performs processes related to the physical layer. The layer 1 processing section 1041, for example, performs processes for a signal that is received on the downlink, including channel decoding, a discrete Fourier transform (DFT), frequency demapping, an inverse fast Fourier transform (IFFT), data demodulation and so on. Also, the layer 1 processing section 1041 performs processes for a signal to transmit on the uplink, including channel coding, data modulation, frequency mapping, an inverse Fourier transform (IFFT), and so on.

The MAC processing section 1042 performs, for a signal that is received on the downlink, MAC layer retransmission control (HARQ) and an analysis of downlink scheduling information (specifying the PDSCH transport format, specifying the PDSCH resource blocks), and so on. Also, the MAC processing section 1042 performs, for a signal to transmit on the uplink, MAC retransmission control, and an analysis of uplink scheduling information (specifying the PUSCH transport format, specifying the PUSCH resource blocks), and so on.

The RLC processing section 1043 performs, for packets received on the downlink/packets to transmit on the uplink, packet division, packet combining, RLC layer retransmission control, and so on.

The interference level measurement section 1044 measures the interference level from other user terminals connected to different radio base stations. For example, in the event of the above-described first example (see FIG. 4), the interference level measurement section 1044 in user terminal #2 measures the interference level from another user terminal #1. For the measurement of the interference level, path loss, penetration loss, antenna gain and so on may be used, and, for example, the path loss of a downlink channel (between radio base station #2 and user terminal #2) may be measured.

The interference level information generating section 1045 generates information related to the interference level, based on the interference level measured in the interference level measurement section 1044. The information related to the interference level may be the interference level measured in the user terminal itself, or may be the result of determining in the user terminal whether or not the interference level is greater than a predetermined reference value (threshold value #1') (change request signal). The information related to the interference level generated in the interference level information generating section 1045 is transmitted to the radio base station via the transmitting/receiving sections 103.

The transmission power setting section 1046 controls uplink signal transmission power in accordance with commands from the radio base stations. For example, in the event of the above-described first example (see FIG. 4), a change request to lower the transmission power of user terminal #1 is transmitted to radio base station #1, so that the transmission power setting section 1046 in user terminal #1 sets the transmission power of uplink signals low based on the command from radio base station #1.

As described above, even when different DL/UL configurations are applied between neighboring radio base stations, it is still possible to reduce the interference between the neighboring transmitting/receiving points by reporting a request for a change of the DL/UL configuration and/or transmission power and controlling transmission parameters based on the interference level from other radio base stations.

Now, although the present invention has been described in detail with reference to the above embodiment, it should be obvious to a person skilled in the art that the present invention is by no means limited to the embodiment described herein. The present invention can be implemented with various corrections and in various modifications, without departing from the spirit and scope of the present invention defined by the recitations of the claims. Consequently, the descriptions herein are provided only for the purpose of explaining examples, and should by no means be construed to limit the present invention in any way.

The disclosure of Japanese Patent Application No. 2012-127182, filed on June 4, 2012, including the specification, drawings and abstract, is incorporated herein by reference in its entirety.

## Claims

1. A radio communication method in a radio communication system in which a plurality of radio base stations that communicate with a user terminal by means of time division duplexing each change a DL/UL configuration independently, the radio communication method comprising the steps in which:
each radio base station:
measures interference levels from other radio base stations; and
transmits a change request signal to request a change of the DL/UL configuration and/or a change of transmission power to the other radio base stations, based on the measured interference levels; and
the other radio base stations, having received the change request signal, change the DL/UL configuration and/or transmission power and communicate with the user terminal.

2. The radio communication method according to claim 1, wherein, when a total value of the interference levels from the other radio base stations is greater than a first reference value, each radio base station transmits the change request signal to the other radio base stations.

3. The radio communication method according to claim 1 or claim 2, wherein the other radio base stations, having received the change request signal, change the DL/UL configuration and/or transmission power in accordance with the change request signal, when a reception level with respect to the radio base station having transmitted the change request signal is greater than a second reference value.

4. The radio communication method according to claim 1, wherein each radio base station measures an interference level with respect to each of the other radio base stations by using specific reference signals transmitted from the other radio base stations separately, and selectively transmits the change request signal to a radio base station where the interference level is greater than the first reference value.

5. The radio communication method according to claim 1, further comprising the steps in which:
the user terminal that is connected to the radio base station:
measures the interference levels from other user terminals connected to different radio base stations; and
transmits information related to the measured interference levels to the connecting radio base station;
the radio base station, having received the information related to the interference levels:
generates a change request signal to request a change of transmission power to the other user terminals; and
transmits the change request signal to the radio base stations to which the other user terminals are connected; and
the radio base stations, having received the change request signal, change the transmission power of user terminals.

6. The radio communication method according to claim 1, wherein an interfered radio base station, which receives interference from other radio base stations, requests the other radio base stations to adopt the same DL/UL configuration, by using the change request signal.

7. A radio communication method in a radio communication system, which includes a user terminal, a plurality of radio base stations that communicate with the user terminal by means of time division duplexing, and a centralized control base station that is connected with the plurality of radio base stations, and in which the plurality of radio base stations each change a DL/UL configuration separately, the radio communication method comprising the steps in which:
each radio base station:
measures interference levels from other radio base stations; and
reports information related to the measured interference levels to the centralized control base station;
the centralized control base station transmits a change request signal to request a change of the DL/UL configuration and/or a change of transmission power to a predetermined radio base station, based on the received information related to the interference levels; and
the radio base station, having received the change request signal, changes the DL/UL configuration and/or transmission power and communicates with the user terminal.

8. The radio communication method according to claim 7, wherein each radio base station measures an interference level from each of the other radio base stations by using specific reference signals transmitted from the other radio base stations separately, and selectively transmits information related to an interference level with respect to a radio base station where the interference level is greater than a first reference value, to the centralized control base station.

9. A radio communication system in which a plurality of radio base stations that communicate with a user terminal by means of time division duplexing each change a DL/UL configuration independently, wherein each radio base station comprises:
an interference level measurement section configured to measure interference levels from other radio base stations;
a signal generating section configured to generate a change request signal to request a change of the DL/UL configuration and/or a change of transmission power of the other radio base stations, based on the measured interference levels;
a transmission section configured to transmit the change request signal to the other radio base stations;
a receiving section configured to receive change request signals that are transmitted from the other radio base stations; and
a setting section configured to change the DL/UL configuration and/or transmission power based on the change request signals received.

10. A radio base station in a radio communication system in which a plurality of radio base stations that communicate with a user terminal by means of time division duplexing each change a DL/UL configuration independently, the radio base station comprising:
an interference level measurement section configured to measure interference levels from other radio base stations;
a signal generating section configured to generate a change request signal to request a change of the DL/UL configuration and/or a change of transmission power of the other radio base stations, based on the measured interference levels;
a transmission section configured to transmit the change request signal to the other radio base stations;
a receiving section configured to receive change request signals that are transmitted from the other radio base stations; and
a setting section configured to change the DL/UL configuration and/or transmission power based on the change request signals received.

11. A user terminal in a radio communication system in which a plurality of radio base stations that communicate with the user terminal by means of time division duplexing each change a DL/UL configuration independently, the user terminal comprising:
an interference level measurement section configured to measure interference levels from other user terminals connected to different radio base stations; and
a transmission section configured to transmit a change request signal to request a change of transmission power to the other user terminals, to a connecting radio base station, depending on a scale of the measured interference levels.
